# EUROPEAN PATENT APPLICATION

(11) **EP 1 849 705 A1**
(43) Date of publication of application: **31.10.2007**
(21) Application number: 06113012.6
(22) Date of filing: 24.04.2006
(51) Int. Cl.: B64D 17/56

(54) **Parachute release device**

(71) Applicant: Aviacom S.A., 1420 Braine-l'Alleud (BE)
(72) Inventor: Goorts, Karel, 3090 Overrijse (BE)
(74) Representative: Callewaert, Jean

(57) **Abstract**

A parachute release device enabling an automatic opening of the parachute during a fall of an object of a person to which the parachute is attached. The parachute release device determines the height at which the parachute is to be opened and is provided with means for a operating a parachute opening device. This device comprises position determination means determining a reference vector, based upon the earth's magnetic field, used for filtering and adjusting the position of the object in a three axis coordinate reference system, whereby the filtering is performed by omitting inaccurate data generated during an inappropriate orientation of the object or person during the fall thereof.

## Description

The present invention relates to a parachute release device enabling an automatic opening of the parachute during a fall of an object of a person to which the parachute is attached. The parachute release device determines the height at which the parachute is to be opened and is provided with means for a operating a parachute opening device. The parachute release device can cooperate with a main parachute or an emergency or auxiliary parachute.

Such a device is known from EP 0 281 159 and US 6,378,808. According to this known device, a pressure sensor is used as height determining means. This sensor is used for determining the initial height value and for determining further pressure values which are compared with theoretical values. These theoretical values are however not very accurate, since the pressure measured during the fall depends highly from the position of the object or the person. In case the object is a person performing acrobatic movements, the pressure reading will vary as to which position is taken by the person. As an example, the altitude's error caused by a person going from a belly up to a belly down position is about 80m.

Typically the sensor signal is affected by Electric noises, Mechanical noises and Dynamic variations due to the modification of the position of the parachutist during the fall.

Filtering effectively those perturbing effects could come in conflict with the accuracy requirements and measurement reliability.

During the fall, the pressure measured by the pressure sensor is in fact the sum of the barometric pressure, which is related to altitude, and of the dynamic pressure, which is related to the falling speed of the parachutist.

This dynamic pressure is "positive" when the face of the skydiver is directed downwards, the so-called belly-down falling position. The resulting pressure on the sensor will make believe that the skydiver' altitude is lower than actually.

This dynamic pressure is "negative" when the face of the skydiver is directed upwards, the so-called belly-up position. The resulting pressure on the sensor will make believe that the skydiver' altitude is higher than actually.

In such cases the parachute release device is normally situated at the belly side of the skydiver. During the free fall, the skydiver's position may change quite quickly and such variations can impact dramatically the accuracy of the measure.

The aim of the present invention is to provide a parachute release device that is generating a release signal for opening the parachute that is not dependent on the orientation of the object or the person to which the device is attached.

To this aim, the parachute release device, according to the invention, comprises a data processing and position determining means connected to said data processing system and provided for determining a reference vector positioning parameter indicating the position and/or orientation in a 3-axis coordinate reference system of a falling object or person to which the said parachute is attached, said data processing system being provided for calculating from said reference vector positioning parameter a filtered instant position value, and for generating a release signal for opening said parachute when said filtered instant position reaches an opening position value.

By filtered position value is meant the position indicating value generated by the device, whereby values that are generated during an inappropriate position or orientation of the object or person and giving inaccurate data during the fall are filtered out and thus not taken into consideration.

The said device can also comprise a data storage means and, preferably, a wireless transmission means allowing the transmission to a computing equipment of the jump related data, the parachute data, the parachute's owner data and other kinds of traceability data, being possible that said transmission device could also allow upload of new parameters and firmware upgrades.

The parachute release device provided to be mounted on a parachute, which parachute is provided to be attached to an object or a person, comprises thus preferably the following components :
- a data processing system having a release signal output and a memory provided for storing an opening value, indicating the position at which the parachute should be opened, said data processing system being provided for generating a release signal for opening said parachute;
- an height determining means connected to said data processing system and provided for determining an initial height value indicating the height at which a jump is started;
- a position determining means used for evaluating the position of the object in a 3 axis coordinate reference system; and
- a wireless transmission means used to transfer the jumps related data, parachute data, parachute's owner data and other kinds of traceability data to a computing means, said transmission device allowing also upload of new parameters and firmware upgrades to the said data processing system.

In the parachute release device, according to the invention, use is made of a reference vector positioning parameter to adapt the characteristics of the filtering algorithm according to the movements of the skydiver. One of the major advantages of this invention is to be able to disable the filtering function when it is not required allowing the best response time during the majority of free falls. It is for example not required to apply such a filtering when the skydiver is falling with a substantially invariable "belly down" orientation.

An object of the invention is to provide a parachute release device which is provided for more accurately determining at which moment the parachute should be released and which is conceived to store relevant data concerning the jumps, the parachute, the parachute's owner and other kinds of traceability data to transfer to a computing means. Accordingly, the parachute release device is further equipped with a wireless transmission means transferring relevant data stored in said memory concerning the jumps, the parachute, the parachute's owner and other kinds of traceability data and uploading firmware updates and parameters adjustments.

According to the invention, the device further comprises position determining means connected to said data processing system and provided for determining a positioning parameter indicating the position of the falling object to which the parachute is attached, said data processing system being provided for calculating an instant position filtered value using the said positioning parameter, and for generating said release signal when said instant position value reaches a predetermined opening height value.

Since reference vector positioning determining means are used to detect movements performed by the object or the person and to filter the collected data, a more accurate measurement is performed. From the measurement, an accurate position value can be calculated using mathematical formulae. Moreover, when the object or the person performs movements in a Cartesian 2-axis coordinates, it does not disturb the operation of the height determining means.

Said reference vector positioning means will determine the evolution of a reference's vector (e.g. the vertical one, the gravity or the terrestrial magnetic field). The variation speed of variation of this reference's vector will reflect the movements of the object or the person. This method doesn't require any absolute reference and can deal with a low accuracy as only the variations are relevant.

The parachute release device to be mounted on a parachute, which parachute is to be attached to an object or a person, comprises position, in particular orientation, determining means for determining the orientation of said object or said person. This orientation is defined by a reference vector that is calculated on basis of the signal generated by a magnetometer.

The magnetometer comprised in the release device enables, in particular, to measure the earth's magnetic field according to three orthogonal axis. Such a magnetometer is, for example, produced by the American company Honeywell.

From the magnetic field values measured according to three orthogonal axis, the direction and intensity of the earth's magnetic field is calculated. This direction and intensity constitutes said reference vector that is indicating the orientation and, possibly, the position of the parachute release device that is attached to the object of the person and thus of the latter.

Accordingly, the magnetometer constitutes a position determination means determining the reference vector used for filtering and adjusting the position of the object or person in a three axis coordinate reference system, whereby the filtering is performed by omitting inaccurate data generated during an inappropriate orientation of the object or person during the fall thereof.

Further, the parachute release device, advantageously, comprises a height determining means for determining an initial height value indicating the height at which a jump is started.

For determining the actual position for opening the parachute, besides the speed of variation of the reference vector, this initial height value is taken into account.

Thus the parachute release device comprises advantageously:
- positioning determining means, formed by a magnetometer, connected to said data processing system and provided for determining a positioning parameter indicating the position and orientation of said object to which said parachute is attached, said data processing system being provided for generating from said positioning parameter a release signal when said instant position filtered value reaches said opening position value.
- said position determining means comprises a 3-axis magnetometer provided for determining the reference vector in x-y-z coordinates of the object or person attached to the parachute,
- said data processing system comprises comparison means provided for comparing said further reference vector position measurements with said reference position to determine a position value

According to a preferred embodiment of the device according to the invention, said reference vector positioning determining means is further provided for filtering the said collected data and increase the accuracy of the said data processing system provided for generating said release signal for releasing an auxiliary parachute. This allows increasing the accuracy of the said device when the falling object is performing controlled or uncontrolled movements during the free fall phase.

According to another embodiment of the device according to the invention, said reference vector positioning determining means is further provided for disabling the said device when the skydiver is entering a swoop mode after releasing the main parachute. This allows a safer functioning of the said device in new and creative jumps' disciplines.

According to an interesting embodiment of the device according to the invention, said positioning determining means detects the opening of the main parachute reducing dramatically the unexpected activation of the auxiliary parachute after opening of the main parachute.

According to an advantageous embodiment of the device according to the invention, said parachute release device can be equipped with a wireless transmission means used to transfer the jumps related data, parachute data, parachute's owner data and other kinds of traceability data to a computing means.

According to a very advantageous embodiment of the device according to the invention, said parachute release device can be equipped with a wireless transmission means used to upload firmware updates and parameters adjustments.

The parachute release device, according to the invention, comprises for example, a graphical user interface providing a user interface to monitor and configure said parachute release device. Via this interface jump modes can be preprogrammed into the memory of the device.

Jump modes describe the parameters checked by the said device to activate the auxiliary parachute. All modes except the "Swoop" one will not care about the main parachute being opened or not. The "Swoop" mode will deactivate the monitoring system as soon as the main parachute is detected to be opened.

| Jump Mode | Triggering Altitude | Triggering Vertical Speed | Stop monitoring after main parachute opens |
|---|---|---|---|
| Standard (or Pro) | Below 280 m | Below -35 m/s | No |
| Student | Below 330 m | Below -20 m/s | No |
| Tandem | Below 660 m | Below -35 m/s | No |
| Extreme | Below 280 m | Below -35 m/s | Yes |

When the above conditions are met for a particular jump mode, the auxiliary parachute is automatically opened by the parachute release device that sends a parachute release signal to a parachute opening device such as, for example, a pyro-electrical cutter.

The parachute release device will permanently check the altitude, the vertical speed and the reference vector (as well as the main parachute release for the Swoop mode).

The reference vector space position will be used to adjust the altitude computed by the said device.

The vertical speed will drive the Fall State Machine allowing to divide a jump into 3 phases : Ground/Rise, Free Fall and Parachute Fall.

The parachute release device may further comprise an altimeter, an accelerometer and means for determining the velocity of the object or person to which the device is attached.

## Claims

1. A parachute release device to be mounted on a parachute, which parachute is to be attached to an object or a person, this device comprising orientation determining means for determining the orientation of said object or said person.

2. A device according to claim 1, wherein said orientation determining means comprise a magnetometer.

3. A device according to claim 2, wherein said magnetometer enables indicating the position and/or orientation of the object or the person to which the parachute is attached during the fall thereof.

4. A device according to any of claims 1 to 3, wherein this device comprises position determination means determining a reference vector used for filtering and adjusting the position of the object in a 3 axis coordinate reference system, whereby the filtering is performed by omitting inaccurate date generated during an inappropriate orientation of the object or person during the fall thereof

5. A device according claim 4, wherein this device comprises positioning determining means connected to said data processing system and provided for determining a positioning parameter indicating the position and orientation of said object to which said parachute is attached, said data processing system being provided for generating from said positioning parameter a release signal when said instant position filtered value reaches said opening position value.

6. A device according to any of claims 1 to 5, wherein this device comprises a data processing system having a release signal output and a memory provided for storing an opening position value, indicating the position at which the parachute should be opened, said data processing system being provided for generating a release signal for opening said parachute when said opening position value is reached.

7. A device according to any of claims 1 to 6, wherein this device comprises a height determining means provided for determining an initial height value indicating the height at which a jump is started.

8. A device according to any of claims 1 to 7, wherein said data processing system comprises means for filtering said collected data generating a signal when said position filtered value matches a predetermined threshold value.

9. A device according to any of claims 1 to 8, wherein said filtering means of said data is provided for generating said release signal for releasing an auxiliary parachute after having generated said peak value signal when said filtered data exceed said threshold.

10. A device according to any of claims 1 to 9, wherein said data processing system comprises further filtering means indicating that said main parachute has been opened, said data processing system being, if required, disabled until the next jump.

11. A device according to any of claims 1 to 10, wherein:
- said position determining means comprises a 3-axis magnetometer provided for determining the reference vector in x-y-z coordinates of the object or person attached to the parachute,
- said data processing system comprises comparison means provided for comparing said further reference vector position measurements with said reference position to determine a position value,
- said position sensor is further provided for determining a further instant position value, independent from said instant position value calculated from said position parameter,
- said data processing system comprises means for comparing said further instant position value with said calculated instant position value,
- said data processing system comprises further means provided for correcting said instant speed on the basis of said comparison.

12. Device according to any one of the preceding claims, **characterized in that** said data processing system comprises comparison means provided for comparing jumps related data with a jumps threshold value to determine a possible said parachute release device check-up requirement.

13. Device according to any one of the preceding claims, **characterized in that** said data processing system comprises comparison means provided for comparing said parachute data and said parachute's owner data to identify possible stolen parachutes.

14. Device according to any one of the preceding claims, **characterized in that** said data processing system comprises comparison means provided for comparing said parachute data and said parachute's owner data to manage a whole of hired parachutes.

15. A device according to any one of the preceding claims, wherein this device comprises a wireless transmission means used to transfer the jumps related data, parachute data, parachute's owner data and/or other kinds of traceability data to a computing means, said transmission means allowing also the upload of new parameters and firmware upgrades to the said data processing system.

16. Device according to any one of the preceding claims, **characterized in that** said parachute release device comprises an ISM band wireless transceiver provided for transferring the jumps related data, parachute data, parachute's owner data and other kinds of traceability data to a computing means.

17. Device according to claim 16, **characterized in that** said data processing system comprises comparison means provided for comparing said traceability data with said reference traceability data to determine a parachute status value.

18. Device according to any of claims 15 to 17, **characterized in that** said wirelessly transmitted data are received and processed by a walk-through scanner in order to allow the skydiver to proceed to boarding.

19. Device according to any of claims 15 to 18, **characterized in that** said wireless transmission is used to send release instruction to the said data processing system in order to generate a remotely release signal in case of emergency procedure.

20. Device according to any of claims 15 to 19, **characterized in that** said wireless transmission is used to upload latest version of the said data processing firmware for bug fixing or upgrade purposes.
